# FASCICULE DE BREVET EUROPEEN

(11) **EP 3 232 045 B1**
(45) Date de publication et mention de la délivrance du brevet: **22.04.2020**
(21) Numéro de dépôt: 17165296.9
(22) Date de dépôt: 06.04.2017
(51) Int. Cl.: F02M 37/02, F02M 37/00, B33Y 80/00, B33Y 10/00, B32B 15/00, F02M 37/22

(54) **PROCÉDÉ DE FABRICATION D'UNE CRÉPINE ET D'UN ÉJECTEUR COMPRENANT UNE TELLE CRÉPINE**
HERSTELLUNGSVERFAHREN EINES FILTERSIEBS UND EINES AUSWERFERS, DER EIN SOLCHES FILTERSIEB UMFASST
METHOD FOR MANUFACTURING A STRAINER AND AN EJECTOR COMPRISING SUCH A STRAINER

(30) Priorité: 12.04.2016 FR 1653187
(43) Date de publication de la demande: 18.10.2017
(73) Titulaire: Zodiac Aerotechnics, 42230 Roche La Moliere (FR)
(72) Inventeur: CORMAN, François, 69003 Lyon (FR)
(74) Mandataire: Cabinet Laurent & Charras

(56) Documents cités:
- EP-A2- 2 006 526
- US-A1- 2015 285 502
- US-B2- 6 988 491

## Description

### DOMAINE TECHNIQUE

La présente invention se rapporte au domaine technique de l'aéronautique, et concerne plus particulièrement un procédé de fabrication d'une crépine d'un éjecteur utilisé pour le transfert de carburant entre deux réservoirs de carburant d'un aéronef ou pour l'alimentation en carburant d'un moteur.

La crépine fabriquée par un procédé selon l'invention peut être assujettie à tout type de dispositif nécessitant une filtration avant le passage d'un fluide, tel que par exemple une pompe, ou bien à un disque de rupture calibré pour éclater à une pression déterminée, mis en œuvre dans une installation soumise à pression.

### ART ANTERIEUR

Dans le domaine de l'aéronautique, il est connu d'utiliser des éjecteurs alimentés par un débit moteur, fourni par exemple par une sortie de réacteur ou par une pompe pour transférer du carburant entre deux réservoirs de carburant d'un aéronef.

En effet, lorsque le groupe réservoir de l'aéronef est composé de plusieurs réservoirs, il est nécessaire que le carburant soit transféré de réservoirs en réservoirs, notamment au moyen d'un éjecteur.

L'éjecteur est alimenté par un flux de carburant et fonctionne selon le principe de l'effet Venturi. Le flux de carburant passe en particulier dans un injecteur de forme tronconique avec un diamètre de sortie calibré, inférieur au diamètre de l'entrée, pour accélérer le flux de carburant. La sortie de l'injecteur communique avec une entrée secondaire de l'éjecteur, agencée orthogonalement au flux de sortie de l'injecteur, et à partir de laquelle est aspiré, par effet Venturi, un second flux de carburant qui est présent dans un premier réservoir. Les deux flux de carburant sont mélangés et ensuite propulsés dans une conduite de diffusion de l'éjecteur, agencée de manière coaxiale à la sortie de l'injecteur avec un col de sortie ayant une forme tronconique évasée pour ralentir le flux. Le col de sortie communique avec un deuxième réservoir pour y transférer le carburant.

L'avantage principal de ce type d'éjecteur est qu'il ne s'use pas et qu'il ne nécessite aucune maintenance car il fonctionne sans pièce mécanique mobile. Il ne présente également aucun risque d'incendie ou d'explosion, car il fonctionne sans moteur électrique. Il peut ainsi être placé dans des zones à atmosphère explosive, et éventuellement difficiles d'accès.

De préférence, l'entrée secondaire de l'éjecteur est assujettie à une crépine comprenant un conduit dont une première extrémité est destinée à être raccordée à l'entrée secondaire de l'éjecteur, et dont une deuxième extrémité est logée dans un boîtier comprenant une face ouverte, de préférence en regard de l'extrémité du conduit, pour le passage du carburant. La face ouverte du boîtier est obturée par une grille en métal faisant office de filtre. Le boîtier est destiné à être immergé dans un premier réservoir de carburant.

De ce qui précède, une crépine comprend plusieurs composants assemblés les uns aux autres. Chacun de ces composants doit être géré d'un point de vue conception, validation, fabrication, approvisionnement, stockage. Par exemple, chaque composant a subi, en vue de sa conception, des opérations diverses de moulage, d'usinage, de formage, etc.

Afin de fabriquer la crépine, des opérations de montage et d'assemblage sont nécessaires, et impliquent l'utilisation de composants supplémentaires, tels que des vis, rondelles, joints, etc. et/ou des opérations spécifiques, telles que des opérations de sertissage, etc. exigeant des outillages et machines adaptés.

Il en résulte que la conception et la fabrication d'une crépine est longue, coûteuse et fastidieuse. De plus, il a été constaté que la continuité électrique entre les composants de la crépine n'était pas suffisante de sorte que cela nécessite la mise en œuvre de protections et de traitements de surface additionnels, complexifiant davantage le procédé de fabrication, et augmentant de fait son coût.

Le document US6988491 décrit un procédé de fabrication d'une crépine selon le préambule de la revendication 1.

### EXPOSE DE L'INVENTION

L'un des buts de l'invention est donc de remédier à ces inconvénients en proposant un procédé de fabrication d'une crépine d'éjecteur, qui soit simple, rapide et peu onéreux, et qui permet d'obtenir une crépine fiable avec une continuité électrique optimale.

A cet effet, et pour résoudre les problèmes précités, il a été mis au point un procédé de fabrication d'une crépine d'un éjecteur utilisé pour transférer du carburant entre deux réservoirs d'un aéronef ou pour l'alimentation en carburant d'un moteur. La crépine comprend un conduit dont une première extrémité est, par exemple, destinée à être raccordée à une entrée de l'éjecteur, et dont une deuxième extrémité est logée dans un boîtier comprenant une face ouverte pour le passage du carburant. La face ouverte du boîtier est obturée par une grille faisant office de filtre.

Selon l'invention, le procédé est remarquable en ce qu'il consiste à fabriquer le conduit, le boîtier et la grille de la crépine en une seule pièce monobloc en matière métallique, par exemple en aluminium.

De cette manière, le procédé de fabrication de la crépine selon l'invention ne met en œuvre qu'une seule pièce. En d'autres termes, il n'y a qu'une seule pièce à gérer du point de vue conception, validation, fabrication, approvisionnement, stockage. La fabrication est simple, rapide et peu onéreuse. De plus, étant donné que la crépine est formée en une seule pièce, sans moyens de fixation, la continuité électrique est optimale, et la crépine est plus légère.

L'invention permet d'éviter les opérations de manutention et d'assemblage, ainsi que d'améliorer la répétabilité du procédé.

Avantageusement, la crépine est fabriquée en même temps qu'un éjecteur de carburant, avec la première extrémité du conduit de la crépine raccordée de manière monobloc avec une entrée de l'éjecteur. Ceci permet d'intégrer la crépine dans la conception de l'éjecteur et de ne plus devoir la gérer en tant que pièce indépendante. Par ailleurs, les éléments de fixation entre la crépine et l'éjecteur sont supprimés, ce qui facilite davantage la fabrication et permet de diminuer au maximum les coûts de revient.

L'invention fournit enfin un éjecteur utilisé par exemple pour transférer du carburant entre deux réservoirs d'un aéronef, ou pour l'alimentation en carburant d'un moteur. L'éjecteur comprend un injecteur avec une entrée, formant une entrée principale de l'éjecteur, et présentant un diamètre calibré, et une sortie tronconique avec un diamètre inférieur. La sortie de l'injecteur est en communication, d'une part, avec une entrée dite secondaire de l'éjecteur agencée orthogonalement à la sortie de l'injecteur et, d'autre part, avec une conduite de diffusion, agencée de manière coaxiale à la sortie de l'injecteur, avec un col de sortie ayant une forme tronconique évasée.

Selon l'invention, la l'entrée secondaire de l'éjecteur est raccordée à une crépine formée en une seule partie monobloc, avec ladite crépine qui forme également une seule partie avec au moins ladite entrée secondaire.

Ainsi, le nombre de pièce est encore diminué ce qui permet d'accroitre davantage les avantages de la présente invention.

De ce qui précède, l'invention vise à protéger d'une manière large une crépine, dont le conduit, le boîtier et la grille de la crépine sont réalisés en une seule pièce monobloc, formant avantageusement partie intégrante d'un éjecteur, indépendamment de la technique de fabrication mise en œuvre.

Pour simplifier la conception et la fabrication, et diminuer encore les coûts de revient, le procédé de fabrication est avantageusement réalisé par une technique de fabrication additive, couche par couche.

### DESCRIPTION SOMMAIRE DES FIGURES

D'autres avantages et caractéristiques ressortiront mieux de la description qui va suivre, donnée à titre d'exemple non limitatif, de la crépine et de l'éjecteur selon l'invention, à partir des dessins annexés dans lesquels :
- la figure 1 est une représentation schématique en coupe longitudinale de la crépine;
- la figure 2 est une représentation schématique en coupe longitudinale d'un éjecteur intégrant la crépine ;
- la figure 3 est une représentation schématique en perspective d'un ensemble éjecteur et crépine monobloc.

### DESCRIPTION DETAILLEE DE L'INVENTION

L'invention concerne un procédé de fabrication d'une crépine, elle sera décrite en relation avec un éjecteur (2) utilisé pour le transfert de carburant entre deux réservoirs de carburant d'un aéronef ou pour l'alimentation en carburant d'un moteur. La crépine (1) est fabriquée en une seule pièce, en matière métallique, par exemple en aluminium. La crépine (1) peut être assujettie à tout dispositif nécessitant une filtration avant le passage d'un fluide, tel que par exemple une pompe ou bien à un disque de rupture.

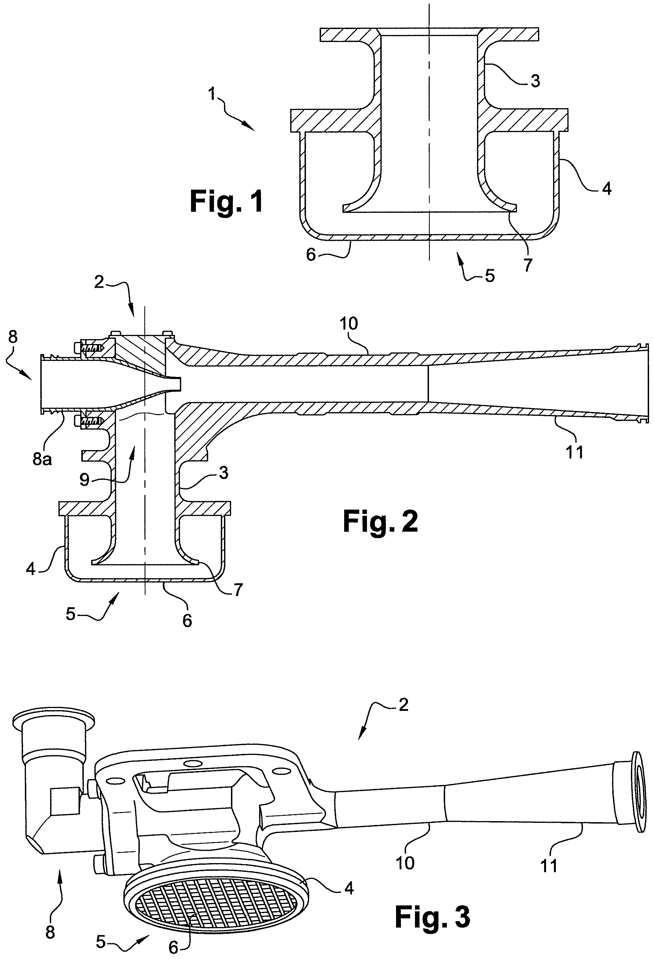

En référence aux figures 1 et 2, la crépine (1) comprend un conduit (3) dont une extrémité est logée dans un boîtier (4). Le boîtier (4) comprend une forme générale cylindrique, coaxiale au conduit (3), et présente une face ouverte (5) en regard de l'extrémité du conduit (3) pour le passage du carburant. La face ouverte (5) est obturée par une grille (6) pour faire office de filtre. L'extrémité du conduit (3) qui est logée dans le boîtier (4) comprend un col (7) de forme tronconique évasée.

Le conduit (3), le boîtier (4), et la grille (6) sont fabriqués d'un seul tenant pour former une pièce monobloc.

En référence aux figures 2 et 3, l'extrémité de la crépine (1) qui n'est pas logée dans le boîtier (4) est, par exemple, destinée à être raccordée à une entrée d'un éjecteur (2).

Plus précisément, et en référence à la figure 2, un éjecteur (2) est utilisé pour transférer du carburant entre deux réservoirs d'un aéronef et comprend un injecteur (8), sous la forme d'un conduit (8a), avec une entrée présentant un diamètre calibré, et une sortie tronconique avec un diamètre inférieur au diamètre de l'entrée. L'injecteur (8) est destiné à être connecté à une pompe qui l'alimente avec un flux de carburant. La conformation de l'injecteur (8) permet, en sortie, d'accélérer ce flux de carburant.

La sortie de l'injecteur (8) est en communication, d'une part, avec une entrée secondaire (9) de l'éjecteur (2) agencée orthogonalement à la sortie de l'injecteur (8) et, d'autre part, avec une conduite (10) de diffusion, agencée de manière coaxiale à la sortie de l'injecteur (8), avec un col de sortie (11) ayant une forme tronconique évasée.

L'entrée secondaire (9) de l'éjecteur (2) est raccordée avec le conduit (3) de la crépine (1), dont le boîtier (4) est immergé dans un premier réservoir de carburant. La sortie de l'éjecteur (2) communique avec un deuxième réservoir pour le transfert de carburant en tant que tel.

Le flux de carburant accéléré issue de l'injecteur (8) provoque une aspiration par un effet Venturi d'un second flux de carburant qui traverse la grille (6), le boîtier (4) et le conduit (3) de la crépine (1). Le mélange des flux de carburant est propulsé dans la conduite (10) de diffusion et est ralenti en sortie, du fait du col de sortie (11) évasé, pour son transfert dans le deuxième réservoir.

Avantageusement, la crépine (1) est fabriquée d'une seule pièce avec l'entrée secondaire (9) de l'éjecteur (2).

La technique de fabrication utilisée consiste en une technique de fabrication additive, couche par couche.

La crépine (1) comprend une seule pièce de sorte que sa conception, validation, fabrication, son approvisionnement, et son stockage sont facilités. La fabrication est simple, rapide et peu onéreuse. De plus, étant donné que la crépine (1) est formée en une seule pièce, sans moyens de fixation, la continuité électrique est optimale et la crépine (1) est plus légère. Ces avantages sont amplifiés si la crépine (1) fait partie intégrante et monobloc avec l'éjecteur (2).

## Revendications

1. Procédé de fabrication d'une crépine (1) d'un éjecteur (2) utilisé pour transférer du carburant entre deux réservoirs d'un aéronef ou pour l'alimentation en carburant d'un moteur, ladite crépine (1) comprenant un conduit (3) dont une première extrémité est destinée par exemple à être raccordée à une entrée (9) de l'éjecteur (2), et dont une deuxième extrémité est logée dans un boîtier (4) comprenant une face ouverte (5) pour le passage du carburant, la face ouverte (5) étant obturée par une grille (6) faisant office de filtre, le procédé étant ***caractérisé* en ce qu'**il consiste à fabriquer le conduit (3), le boîtier (4) et la grille (6) de la crépine (1) en une seule pièce monobloc, dans une matière métallique, de préférence en aluminium, par une technique de fabrication additive, couche par couche.

2. Procédé selon la revendication 1, ***caractérisé* en ce que** la crépine (1) est fabriquée en même temps qu'un éjecteur (2), avec la première extrémité du conduit (3) de la crépine (1) raccordée de manière monobloc avec une entrée (9) de l'éjecteur (2).

3. Procédé de fabrication d'un éjecteur (2) utilisé pour transférer du carburant entre deux réservoirs d'un aéronef ou pour l'alimentation en carburant d'un moteur, ledit éjecteur (2) comprenant un injecteur (8) avec une entrée, formant une entrée principale de l'éjecteur (2), et présentant un diamètre calibré, et une sortie tronconique avec un diamètre inférieur, la sortie étant en communication, d'une part, avec une entrée dite secondaire (9) de l'éjecteur (2) agencée orthogonalement à la sortie de l'injecteur (8) et, d'autre part, avec une conduite (10) de diffusion, agencée de manière coaxiale à la sortie de l'injecteur (8), avec un col de sortie (11) ayant une forme tronconique évasée, ***caractérisé* en ce que** l'entrée secondaire (9) est raccordée à une crépine (1) conforme à celle obtenue par le procédé de la revendication 1, ladite crépine (1) étant fabriquée d'une seule pièce avec l'entrée secondaire (9) de l'éjecteur, dans une matière métallique, de préférence en aluminium, par une technique de fabrication additive, couche par couche.

## Patentansprüche

1. Verfahren zur Herstellung des Saugkorbes (1) eines Ejektors (2), verwendet zur Förderung von Kraftstoff zwischen zwei Tanks eines Luftfahrzeugs oder zur Kraftstoffversorgung eines Motors, wobei dieser Saugkorb (1) eine Leitung (3) enthält, deren erstes Endstück zum Beispiel zum Anschluss an einen Einlass (9) des Ejektors (2) vorgesehen ist und dessen zweites Endstück in einem Gehäuse (4) untergebracht ist, das eine offene Seite (5) zum Durchfluss des Kraftstoffs enthält, wobei die offene Seite (5) durch ein Gitter (6) verschlossen ist, das als Filter dient, wobei das Verfahren ***dadurch gekennzeichnet* ist, *dass*** es darin besteht, die Leitung (3), das Gehäuse (4) und das Gitter (6) des Saugkorbs (1) als einziges Blockteil aus Metall, am besten Aluminium durch eine additive, schichtweise Fertigungstechnik herzustellen.

2. Verfahren nach Anspruch 1, ***dadurch gekennzeichnet, dass*** der Saugkorb (1) gleichzeitig mit einem Ejektor (2) hergestellt wird, wobei das erste Endstück der Leitung (3) des Saugkorbs (1) einstückig an einen Einlass (9) des Ejektors (2) angeschlossen ist.

3. Verfahren zur Herstellung eines Ejektors (2), verwendet zur Förderung von Kraftstoff zwischen zwei Tanks eines Luftfahrzeugs oder zur Kraftstoffversorgung eines Motors, wobei dieser Ejektor (2) eine Einspritzdüse (8) mit einem Einlass enthält, der einen Haupteinlass des Ejektors (2) einstückig a bildet und einen genormten Durchmesser hat, und wobei er einen kegelförmigen Auslass mit kleinerem Durchmesser enthält, wobei der Auslass einerseits mit dem sogenannten sekundären Einlass (9) des Ejektors (2), der orthogonal am Auslass der Einspritzdüse (8) vorgesehen ist und andererseits mit einer Diffusionsleitung (10), die koaxial am Auslass der Einspritzdüse (8) vorgesehen ist, in Verbindung steht, wobei der Auslass (11) eine aufgeweitete Kegelform hat, ***dadurch gekennzeichnet, dass*** der Sekundäreinlass (9) mit einem Saugkorb (1) verbunden ist, der dem entspricht, der Ergebnis des Verfahrens nach Anspruch 1 ist, wobei dieser Saugkorb (1) mit dem Sekundäreinlass (9) des Ejektors aus einem Stück aus Metall, am besten Aluminium, durch eine additive, schichtweise Fertigungstechnik hergestellt wird.

## Claims

1. A method for manufacturing a strainer (1) of an ejector (2) used to transfer fuel between two tanks of an aircraft or to supply fuel to an engine, said strainer (1) comprising a conduit (3) whereof a first end is for example intended to be connected to an inlet (9) of the ejector (2), and whereof a second end is located within a housing (4) comprising an open face (5) for the passage of the fuel, the open face (5) being closed off by a grate (6) acting as a filter, the method being ***characterized* in that** it consists of manufacturing the conduit (3), the housing (4) and the grate (6) of the strainer (1) as a single monobloc part, in a metallic material, preferably aluminum, by an additive manufacturing technique, layer by layer.

2. The method according to claim 1, ***characterized* in that** the strainer (1) is made at the same time as an ejector (2), with the first end of the conduit (3) of the strainer (1) connected as a monobloc part with an inlet (9) of the ejector (2).

3. A method for manufacturing an ejector (2) used to transfer fuel between two tanks of an aircraft or to supply fuel to an engine, said ejector (2) comprising an injector (8) with an inlet, forming a primary inlet of the ejector (2), and having a calibrated diameter, and a frustoconical outlet with a smaller diameter, the outlet being in communication on the one hand with a so-called secondary inlet (9) of the ejector (2) arranged orthogonally to the outlet of the injector (8), and on the other hand with a diffusion line (10), arranged coaxially to the outlet of the injector (8), with an outlet neck (11) having a flared frustoconical shape, ***characterized* in that** the secondary inlet (9) is connected to a strainer (1) according to the one obtained with the method of claim 1, said strainer (1) being manufactured in one piece with the secondary inlet (9) of the ejector, in a metallic material, preferably aluminum, by an additive manufacturing technique, layer by layer.
